Europäisches Patentamt

European Patent Office

Office européen des brevets

(19)

(11) Veröffentlichungsnummer : **0 332 157 B1**

(12) # EUROPÄISCHE PATENTSCHRIFT

(45) Veröffentlichungstag der Patentschrift :
14.10.92 Patentblatt 92/42

(51) Int. Cl.⁵ : **F16L 41/08, C02F 3/20**

(21) Anmeldenummer : **89104052.9**

(22) Anmeldetag : **08.03.89**

(54) **Anordnung zur Verbindung einer Verteilvorrichtung mit einer Fluidzuleitung.**

(30) Priorität : **08.03.88 DE 3807502**

(43) Veröffentlichungstag der Anmeldung :
**13.09.89 Patentblatt 89/37**

(45) Bekanntmachung des Hinweises auf die
Patenterteilung :
**14.10.92 Patentblatt 92/42**

(84) Benannte Vertragsstaaten :
**AT BE CH DE ES FR GB GR IT LI NL**

(56) Entgegenhaltungen :
EP-A- 0 133 627
EP-A- 0 229 387
DE-A- 3 441 731
GB-A- 1 593 262
GB-A- 2 141 506
US-A- 4 288 394

(73) Patentinhaber : **ROEDIGER AG**
**Jurastrasse 12**
**CH-4142 Münchenstein (CH)**

(72) Erfinder : **Neumann, Herrmann**
**Stargarder Strasse 5**
**W-6000 Frankfurt/Main (DE)**
Erfinder : **Roediger, Walter**
**Castillostrasse 6**
**W-6380 Bad Homburg (DE)**

(74) Vertreter : **Jochem, Bernd, Dipl.-Wirtsch.-Ing.**
**Staufenstrasse 36**
**W-6000 Frankfurt/Main (DE)**

EP 0 332 157 B1

## Beschreibung

Die Erfindung betrifft eine Belüftungseinrichtung, insbesondere für Abwasserbecken, bestehend aus an einer Fluidzuleitung befestigten Belüftern, wobei jeweils eines dieser beiden Teile mit einem Loch und das andere mit einem dicht in dem Loch sitzenden Stutzen mit einem Durchgangskanal zum Belüfter ausgebildet ist und zwischen der Lochwand und dem Stutzen ein buchsenförmiges, hart-elastisches Zwischenglied aus Kunststoff oder Hartgummi derart fest radial eingespannt ist, daß es gegen die anliegenden Flächen dichtet und reibungsschlüssig entgegen der Einführrichtung auf den Stutzen wirkende axiale Kräfte auf die Lochwand überträgt.

In der Bautechnik und auf vielen Gebieten der Verfahrenstechnik bis hin zur landwirtschaftlichen Technik kommt es häufig vor, daß über eine z. B. aus Kanälen bestehende Zuleitung herangeführtes Gas an einer Vielzahl von Stellen verhältnismäßig fein verteilt austreten soll. Die hierfür erforderlichen verästelten oder großflächigen Zuführungssysteme für eine große Zahl von Verteilvorrichtungen - nachfolgend auch als Belüfter bezeichnet - sind sehr aufwendig, wozu die Kosten der Anbringung der Vorrichtungen an dem Zuführungssystem in starkem Maße beitragen. Der Anschluß erfolgt bisher in üblicher Weise mit schraub-, Bajonett- und sonstigen material- und montageaufwendigen Verbindungen mit den dazu jeweils nötigen zusätzlichen Gegenstücken z. B. Überwurf-Muttern u. dgl. Weiterhin besteht unter besonders günstigen Umständen auch die Möglichkeit, durch eine kraftaufwendige Montagetechnik den in diesem Fall vorzugsweise angeschrägten oder konischen Stutzen unmittelbar in das Loch einzupressen, so daß sich eine selbsthemmende Quetschverbindung ergibt. Problematisch ist dann jedoch das Auswechseln einzelner Verteilvorrichtungen. Außerdem besteht die Schwierigkeit, die Verbindungen so zu gestalten, daß sie langjährig flüssigkeitsdicht bzw. gasdicht bleiben, auch unter der Wirkung von Vibrationen oder von Pendelbewegungen, die durch das die Verteilvorrichtung durchströmende Fluid oder durch äußere Strömungskräfte in dem zu beaufschlagenden Behälter hervorgerufen werden.

Es ist durch die EP-A-0 229 387, EP-A-0 133 627 und GB-A-2 141 506 auch bereits bekannt, die Montage dadurch zu erleichtern, daß ein buchsenförmiges, elastisches Zwischenglied aus Gummi oder Kunststoff in das Loch eingeführt und durch den danach eingesteckten Stutzen derart fest radial eingespannt wird, daß es gegen die anliegenden Flächen dichtend und reibungsschlüssig entgegen der Einführrichtung auf den Stutzen wirkende axiale Kräfte auf die Lochwand überträgt. Das Zwischenglied hat einen Flansch, der an der Fluidzuleitung und ggf. an der Unterseite des Belüfters anliegt. Es kann im Ausgangszustand innen konisch sein und dadurch beim Einführen eines zylindrischen Stutzens radial aufgeweitet werden. Außerdem können das buchsenförmige Zwischenglied und der Stutzen mit dem in Einführrichtung vorderen Ende ein wenig aus der sie jeweils aufnehmenden Bohrung herausragen und an diesem Ende mit wenigstens einem radialen Vorsprung oder Ringwulst ausgebildet sein.

Die bekannten buchsenförmigen, elastischen Zwischenglieder dienen nur der Befestigung und haben keine Steuer- bzw. Ventilfunktion. Wenn zwischen der Fluidzuleitung und der Verteilvorrichtung ein Drosselorgan vorhanden sein soll, werden dafür gemäß US-A-4 288 394 oder GB-A-1 593 262 besondere Teile eingebaut.

Vor allem aber hat man bisher in der beschriebenen Befestigungstechnik mittels elastischer Zwischenbuchsen nur eine Montageerleichterung für herkömmlich gestaltete und angeordnete Verteilvorrichtungen gesehen, aber nicht erkannt, welche Möglichkeiten sie für die Schaffung neuer, über die ganze Fläche gleichmäßig wirksamer Belüftungseinrichtungen bietet.

Entweder waren die Stutzen mit einem Innengewinde versehen, in welches jeweils eine Verteilvorrichtung eingeschraubt wurde (vgl. GB-A-2 141 506), oder die Verteilvorrichtungen waren verhältnismäßig weit voneinander entfernt angeordnet und normalerweise tellerartig rund (EP-A-0 229 387, US-A-4 288 394), so daß sie auf jeden Fall auch gedreht werden konnten. Es kam also bei diesen Konstruktionen grundsätzlich nicht auf eine Montage ohne Drehbewegung der Verteilvorrichtungen an. Wenn es sich z. B. als zweckmäßig erwies, das Einführen des Stutzens durch eine hin- und hergehende Drehbewegung zu unterstützen, so ließ sich dies ohne weiteres praktizieren.

Schließlich ist es durch die US-A-4 288 394 und die DE-A-34 41 731 auch schon bekannt, längliche, rechteckige Verteilvorrichtungen mit verhältnismäßig großem Zwischenabstand in Längsrichtung bzw. in Querrichtung auf der Fluidzuleitung anzubringen. Abgesehen davon, daß in beiden Fällen die Verteilvorrichtungen nicht vormontiert werden können, um an der Baustelle nur noch mit der Fluidzuleitung verbunden zu werden, bleiben auch hier, ebenso wie bei den bekannten Belüftungseinrichtungen, zwischen den einzelnen Belüftern Lücken frei. Das hat zur Folge, daß über jedem einzelnen Belüfter die Blasenketten zu Blasen-Schwärmen zusammengezogen werden und unerwünschte Wasser-Aufwärtsströmungen entstehen, ähnlich wie bei Mammutpumpen. Der in der Praxis unter Verwendung mehrerer mit gegenseitigem Zwischenabstand angeordneter Belüfter verwirklichte Kompromiß wird gelegentlich als "Pilz- oder Punktbelüftung" bezeichnet, im Gegensatz zur sogenannten "Walzenbelüftung", bei der eine sehr schnelle Wasserwalze mit horizontaler Achse in mittlerer Beckenhöhe entsteht, die noch weniger Kontaktzeit für die Sauerstoffübertragung bietet.

Anzustreben ist jedoch eine "Flächenbelüftung", bei welcher die Luft so gleichmäßig über die gesamte Bodenfläche des Bekkens verteilt und eingeperlt wird, daß sie in Form von Blasenketten möglichst langsam aufsteigt, um eine möglichst lange Kontaktzeit für den Sauerstoffübergang zu erreichen. Dieses Ergebnis wurde bisher nur von einer vor einigen Jahren bekannt gewordenen, probeweisen Lösung erzielt, bei welcher der gesamte Beckenboden mit Luftkissen aus dünnwandiger, vielfach perforierter Folie ausgelegt war. Obwohl mit dieser Lösung eine ganz ungewöhnlich hohe, die Fachwelt erstaunende Sauerstoff-Übertragung erreicht wurde, hat sie sich in der rauhen Praxis der Abwassertechnik nicht durchsetzen können, da die Luftkissen sich als unhandlich und leicht verletzlich erwiesen.

Der Erfindung liegt die Aufgabe zugrunde, eine Belüftungseinrichtung für die Flächenbelüftung zu schaffen, die robuster ist und sich ohne großen Aufwand montieren und warten läßt.

Vorstehende Aufgabe wird erfindungsgemäß dadurch gelöst, daß die Belüfter eine längliche Form haben, unmittelbar aneinandergrenzend an der Fluidzuleitung befestigt sind und sich quer zu dieser erstrecken.

Weil erfindungsgemäß einfach nur die Belüfter mit ihren neuen, steckbaren und daher gewindefreien Stutzen von oben in die zuvor in die Bohrungen der Belüftungsleitung eingesetzten buchsenförmigen Zwischenglieder eingedrückt zu werden brauchen, entfällt das Hantieren an Verschraubungen oder anderen Befestigunsmitteln unterhalb der oberen Ebene der Belüfter oder gar das bisher vielfach notwendige Drehen der Belüfter insgesamt zum Einschrauben in ein Gewinde. Es kann deshalb mit den von oben einsteckbaren Belüftern eine durchgehend geschlossene Fläche ohne montagebedingte Leerräume hergestellt werden, wobei mit verhältnismäßig langen Belüftern von z. B. 1,5 bis 2 Meter Länge nur wenige parallel verlegte Belüftungsleitungen erforderlich sind, um z. B. ein rechteckiges Becken vollflächig zu belüften. Selbstverständlich können auch runde odere andere Beckengrundrisse mit Belüftern lükkenlos überdeckt werden, da die Einzellänge der Belüfter an die Beckenperipherie angepaßt werden kann, zumindest in genormten kleinen Stufen.

In der für die praktische Anwendung bevorzugten Ausführung besteht der längliche Belüfter aus einem mit einem Stutzen versehenen, rohrförmigen oder im Querschnitt im wesentlichen kreisabschnitt- oder kreissektorförmigen, mit der Rundung nach oben weisenden, langgestreckten Basisteil mit wenigstens einer Luftaustrittsöffnung auf der Oberseite und einer diese überspannenden, vielfach durchbrochenen, elastischen Membran, welche die Luftaustrittsöffnung des Basisteils dicht abdeckt und durch den Gasdruck von der gerundeten Oberseite des Basisteils elastisch abhebbar ist. Vorzugsweise übergreift dabei die elastische Membran die Längsseitenkanten des Basisteils und ist an dessen Enden auf seiner Oberseite dicht anliegend gehalten.

Die schmale Bauweise des Belüfters mit einem Längen-/Breiten-Verhältnis von vorzugsweise mindestens etwa 5 gestattet es, daß die elastische Membran nur mit geringer Vorspannung an der gewölbten Oberseite des Basisteils anzuliegen braucht, so daß das Rückstellvermögen im Laufe der Zeit so wenig wie möglich durch die Vorspannung beeinträchtigt wird. Die Wölbung der Oberseite des Basisteils sollte zur weiteren Vervollkommnung in dieser Hinsicht weitgehend der unter Druck entstehenden Auswölbung der Membran angepaßt werden, damit nur eine geringe Rückverformung nötig ist, um die Membran beim Abschalten der Druckzufuhr sich flach und faltenfrei an der Oberseite des Basisteils anlegen zu lassen. Dadurch wird auch langfristig das Eindringen von Abwasserbakterien in Hohlräume unterhalb der Membran vermieden.

Die vorgesehene Befestigung der Belüfter mittels eines buchsenförmigen, elastischen Zwischenglieds eignet sich für die Verbindung verschiedenartiger Belüfter mit Betonkanälen und sonstigen Zuführungssystemen mit rechteckigem oder rundem Querschnitt.

Da auch noch im montierten Zustand die Stellung des Stutzens relativ zum Zwischenglied axial und-/oder durch Drehung verändert werden kann, bietet die Erfindung in einer praktisch bevorzugten Ausführung die Möglichkeit, den Stutzen und das Zwischenglied nach Art eines Ventils zusammenwirken zu lassen, indem eine Zutrittsöffnung oder ein Zutrittskanal zum Durchgangskanal durch eine oder mehrere Steuerflächen am Zwischenglied, dem Stutzen oder wenigstens einem zwischen diesen beiden Teilen angeordneten Steuerglied teilweise verschließbar ist.

Darüber hinaus kann in weiterer bevorzugter Ausgestaltung der Erfindung zwischen dem Boden eines dann topfförmig auszubildenden Zwischenglieds und der Stirnfläche des Stutzens ein verformbares Drosselglied, welches vorzugsweise ein poröser, elastischer Körper aus porendurchgängigem Material ist, eingesetzt sein, dessen freier Durchlassquerschnitt durch Veränderung des axialen Abstands zwischen dem Boden und der Stirnfläche des Stutzens steuerbar ist. Die Topfform kann auch ohne ein solches besonderes Drosselglied gewählt werden, z.B. zur Versteifung des Zwischengliedes, wenn dieses wegen Materialbeständigkeit aus wenig formstabilem Material hergestellt werden muß, je nach der Aggressivität des Fluids. Bei dieser Ausgestaltungsform kann auch der zwischen Topfboden und Stutzenende entstehende Spalt als Drosselorgan benutzt werden.

Die vorstehend in verschiedenen Varianten vorgeschlagene Ausgestaltung der Befestigungsanordnung der Belüfter als Drosselorgan ist beispielsweise bei Erneuerung eines Teils der Verteilvorrichtungen wichtig, weil diese im fabrikneuen Zustand selbst bei unveränderter Form und gleicher Materialart andere Leistungsdaten haben als die noch betriebsfähigen, parallel geschalteten bisherigen Verteilvorrichtungen. Manchmal haben derartige Vorrichtungen von Zuführungssystemen sogar schon im fabrikneuen Zustand verschiedene Leistungsdaten, wenn sie aus verschiedenen Herstellungsserien stammen. Da solche Abweichungen keinen reklamationsfähigen Mangel darstellen, müssen in anderen Fällen ohne derartige steuerbare Drosselmöglichkeit sämtliche Verteilvorrichtungen aus einer gleichen Herstellungsserie stammen. Dadurch wird es nötig, nicht nur unbrauchbare, sondern auch, wie z.B. bei Wasser- oder Abwasserbelüftungseinrichtungen, eine sehr große Zahl parallel arbeitende gebrauchsfähige Vorrichtungen auszuwechseln, um nicht eine unerwünschte Ungleichmäßigkeit in Kauf nehmen zu müssen.

Der erwähnte poröse Körper aus Schaummaterial kann außer der genannten Funktion als Drosselorgan die Aufgabe eines Filters wahrnehmen und z.B. Schmutzpartikel und Wasserdampf aus einem beliebig gestalteten Zuführungssystem eines gasförmigen Fluids herausfiltern. Mit solchen und ähnlichen störenden Beimengungen des Fluids muß in der Praxis gerechnet werden.

Ein normalerweise aus Kunststoff oder Hartgummi hergestelltes Zwischenglied hat über die bereits genannten Vorteile hinaus den weiteren Vorzug, daß es die in der Praxis oft unvermeidlichen Vibrationen der Belüfter und eventuell auch der Fluidzuleitung dämpft. Die zwischen der Fluidzuleitung und den Belüftern wirksame Dämpfung kann in weiterer bevorzugter Ausgestaltung der Erfindung noch dadurch verbessert werden, daß das Zwischenglied außerhalb des Lochs großflächig an dem Belüfter einerseits und an der Umgebung des Loches andererseits satt anliegt, auch wenn die letztere an der entsprechenden Anlagefläche nicht planeben ist. Eine Verbesserung der Dämpfung wird ferner noch bewirkt, wenn zwischen der großflächigen Ausbildung des Zwischengliedes und dem Belüfter eine oder mehrere Weichmaterialscheiben eingelegt werden.

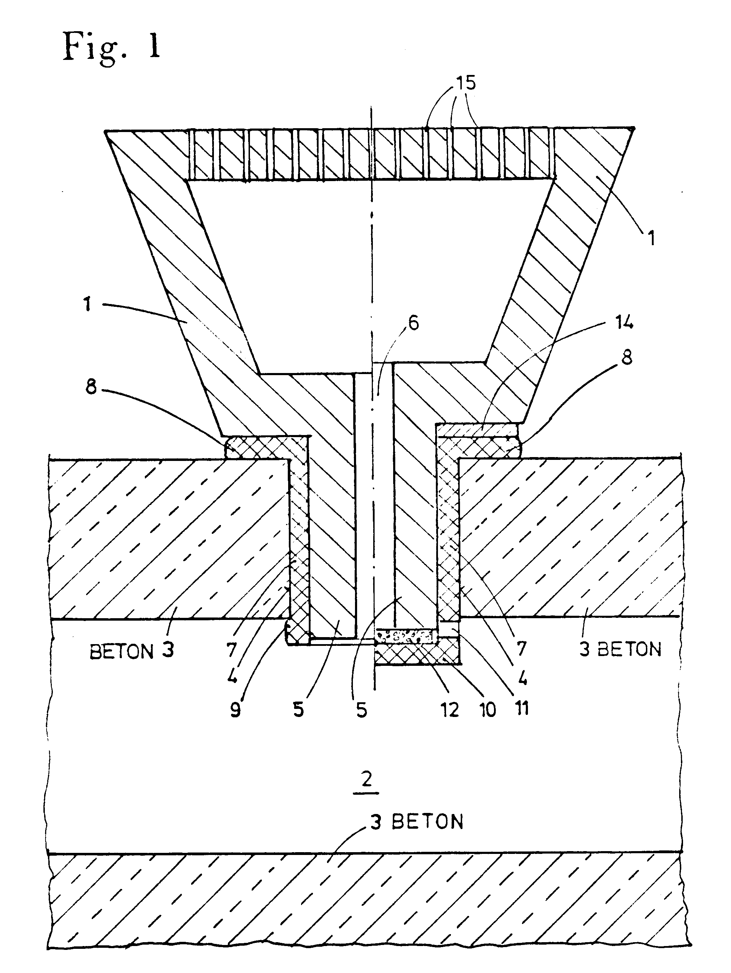

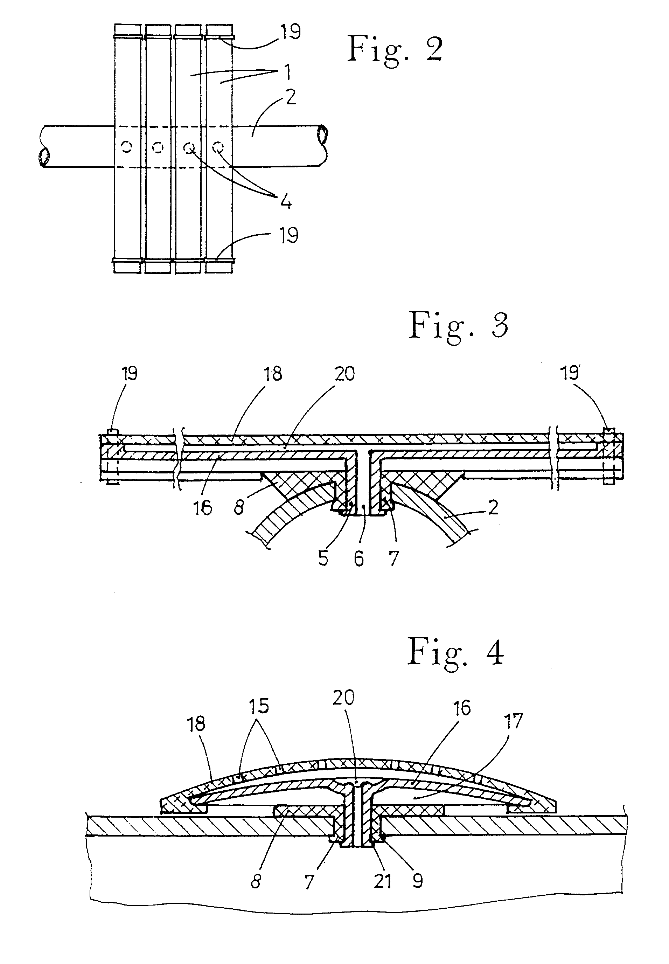

Die Erfindung wird nachstehend anhand der Zeichnung näher erläutert. Darin zeigt Fig. 1 Querschnitte durch rechts und links der eingezeichneten Mittellinie unterschiedliche Varianten von Belüftern einer Belüftungseinrichtung, Fig. 2 eine Draufsicht auf mehrere dicht nebeneinander an ein Rohr angeschlossene, längliche Belüfter, Fig. 3 einen Längsschnitt und Fig. 4 einen Querschnitt durch einen der Belüfter nach Fig. 2.

Die Darstellung nach Fig. 1 zeigt zunächst eine Anschlußstelle eines Belüfters 1 innerhalb eines Betonbeckens. Das Zuführungssystem, d. h. die Fluidzuleitung besteht aus Kanälen 2 in der Bodenplatte des Betonbeckens 3 als Zuleitung.

Das mit 4 bezeichnete Loch in der Wand 3 der Zuleitung 2 trägt kein Gewinde, und zwar weder in der Wandung selbst noch in einer fest und dicht mit der Lochwand verbundenen Auskleidung.

Im Beispielsfall hat der Belüfter 1 zum Anschluß an die Zuleitung 2 einen Stutzen 5 mit einem zentralen Durchgangskanal 6. Der Stutzen 5 ist mittels eines buchsenförmigen Zwischenglieds 7 aus einem hartelastischen Kunststoff im Loch 4 festgelegt.

Das Außenmaß des Zwischenglieds 7 ist knapp größer als das Maß des Lochs 4, so daß das nachgiebige Zwischenglied 7 sich mit mäßigem (Hand-)Druck in das Loch 4 einschieben läßt und dort für die weitere Handhabung und Montage fest genug sitzt.

Es kann ein den Sitz verbessernder, angeformte Ringwulst am Einführende des Zwischenglieds vorhanden sein; es ist zweckmäßig, ihn im Durchmesser und Höhe etwa gleich zu wählen, so daß das Zwischenglied entsprechend um diese Höhe länger sein muß.

Der Querschnitt der inneren Mantelfläche des Zwischenglieds 7 verjüngt sich in Richtung der Einbringung. Er ist auf der Einführseite etwa gleich, am entgegengesetzten Ende etwas geringer als das Außenmaß des einzuführenden Stutzens 5 des Belüfters teilvorrichtung 1. Die Verbindung des Belüfters 1 mit dem Zwischenglied 7 einerseits und dessen Verbindung mit der Lochwandung 4 wird durch das Eindringen des Stutzens 5 in die Öffnung des Zwischenglieds 7 gleichzeitig erreicht. Da das Material des Zwischenglieds 7 als ein durch mäßigen Druck verformbares, hart-elastisches Material gewählt ist, drückt es sich bei diesem Zusammenfügen so gegen die Lochwandung 4, daß ein im Beispielsfall als Anschlag vorgesehener, jedoch nicht zwingend notwendiger Flansch 8 auf Seiten des Belüfters 1 sich etwas verstärkt und auf der anderen Seite des Lochs 4 ein Wulst 9 zwangsläufig entsteht. Wenn - wie oben erwähnt - schon vorab ein Ringwulst angeformt würde, wird sich dieser infolge des Zusammenfügens etwas vergrößern.

Je nach der geometrischen Form des Lochs 4 und je nach der vorbestimmten Kraft für das Zusammenfügen der Teile wird die Material-Zusammensetzung des Zwischenglieds 7 so gewählt, daß die Verbindung nach dem Einbringen dicht und stabil ist.

Während bei der links von der Mittellinie gezeigten Anordnung das Zwischenglied 7 an beiden Stirnseiten offen ist, so daß die Eintrittsöffnung des Durchgangskanals 6 zur Zuleitung 2 hin freiliegt, hat bei der rechts von der Mittellinie gezeigten Anordnung das Zwischenglied 7 auf Seiten der Zuleitung 2 einen Boden 10 und damit insgesamt eine topfförmige Gestalt. Außerhalb der Kanalwand 3, noch innerhalb der Zuleitung 2, befinden sich in der Mantelwand des Zwischenglieds 7, z.B. auch in dem nicht gezeichneten Ringwulst, ein oder mehrere Durchtrittsöffnungen 11, über welche z.B. Luft aus der Leitung 2 in den Raum zwischen dem Boden 10 des Zwischenglieds 7 und der Stirnfläche des Stutzens 5 und von dort weiter über den zentralen Durchgangskanal 6 in den Belüfter 1 gelangt. Die Anordnung der Teile kann so getroffen werden, daß durch mehr oder weniger weites axiales Verschieben, Verdrehen oder Schrauben des Stutzens 5 in das Zwischenglied 7 die Durchtrittsöffnung 11 teilweise verschlossen und dadurch die in den Belüfter 1 gelangende Luft dosiert werden kann.

In ähnlicher Weise kann auch der Spalt zwischen dem Boden 10 und der Stirnfläche des Stutzens 5 als Drosselspalt benutzt werden, wobei in diesem Fall die Durchtrittsöffnungen 11 radial außen im Boden 10 oder unmittelbar neben dem Boden in der Mantelwand des Zwischenglieds 7 anzuordnen wären.

Schließlich kann zur gesteuerten Dosierung des in den Belüfter 1 eingeleiteten Fluids auch ein zusätzliches Steuerglied dienen, welches in besonders einfacher Ausführung eine Scheibe 12 aus porösem, elastischen, porendurchgängigen Schaumstoff sein kann, die durch Veränderung der axialen Relativstellung des Stutzens 5 zwischen dessen Stirnfläche und dem Boden 10 des Zwischenglieds 7 mehr oder weniger stark zusammengedrückt wird, wodurch sich der Strömungswiderstand zwischen der Durchtrittsöffnung 11 und dem Durchlaßkanal 6 ändert.

In Fällen, wo mit Vibrationen des Belüfters 1 zu rechnen ist, z.B. bei ihrer Anordnung an rohrförmigen Fluidzuleitungen, kann es zur Vibrationsdämpfung und zur gleichzeitigen stabilen Abstützung des Belüfters aus statischen Gründen zweckmäßig sein, den außerhalb des Lochs 4 befindlichen Teil 8 des Zwischenglieds 7 großflächig an dem Belüfter 1 anliegen zu lassen. Wenn gleichzeitig eine axiale Verstellung des Stutzens 5 relativ zum Zwischenglied 7 vorgesehen ist, um in der beschriebenen Weise die Fluidzufuhr zum Belüfter 1 zu dosieren, kann zwischen dessen Körper und dem Flansch 8 eine Scheibe 14 eingesetzt werden, die z. B. aus einem weichelastischen Material bestehen kann.

Es versteht sich, daß die Anordnung von Durchtrittsöffnungen und/oder Steuerkanten am Zwischenglied 7 einerseits sowie Eintrittsöffnungen eines oder mehrerer Durchgangskanäle 6 und/oder Steuerkanten an der Stirnseite oder am äußeren Umfang des Stutzens 5 andererseits auch so getroffen sein kann, daß bei einer Drehbewegung die Luftzufuhr mehr oder weniger gedrosselt werden kann.

Alle vorstehenden Kunstruktionsvarianten gelten außerdem sinngemäß für solche Fälle, wo die Wand 3 einer Zuleitung 2 mit nach außen vorstehenden Stutzen mit Durchgangskanälen versehen ist, welche Stutzen unter Verwendung von Zwischengliedern 7 jeweils in einem Loch im Gehäuse eines Belüfters Verteilvorrichtung festlegbar sind.

Schließlich kann es im Einzelfall vorteilhaft sein, wenn gasförmiges Fluid, z.B. Luft, nicht mit gleichmäßigem Druck dem Belüfter 1 zugeführt wird, den sie im Beispielsfall über eine große Zahl von kleinen Öffnungen 15 in ihrer Oberfläche abgibt, sondern wenn der an diesen vielen kleinen Öffnungen 15 wirksame Druck pulsiert. Dies kann bei der gezeigten Anordnung mit einem topfförmigen Zwischenglied 7 beispielsweise dadurch erreicht werden, daß in den Zwischenraum zwischen dem Boden 10 und der Stirnfläche des Stutzens 5 eine Pulsiereinrichtung eingesetzt ist, die z.B. aus mehreren relativ zueinander beweglichen, federnd auf Abstand gehaltenen, vorzugsweise elastisch biegsamen und gegebenenfalls unterschiedlich leicht beweglichen und/oder gelochten Blättern besteht, welche im Luftstrom von der Durchtrittsöffnung 11 zum Durchlaßkanal 6 ins Flattern kommen und dadurch Druckpulsationen erzeugen.

Abweichend von den gezeichneten Ausführungsbeispielen kann die Eintrittsöffnung des Durchgangskanals 6 durch einen Stopfen verschließbar sein. In diesem Fall kann auch bei einem an beiden Enden offenen, buchsenförmigen Zwischenglied 7 eine Durchtrittsöffnung 11 in der Mantelwand des Zwischenglieds 7 vorhanden sein, die nach Art eines Drehschiebers mit einem in den Durchgangskanal 6 mündenden Radialkanal kommuniziert. Es besteht dabei die vorteilhafte Möglichkeit, mit Hilfe des Stopfens den Radialkanal in unterschiedlichem Maße teilweise zu verschließen, um damit eine Grobdosierung des Fluidstroms zu erreichen, wobei die oben beschriebenen Möglichkeiten der Veränderungen von Strömungsquerschnitten als Feindosierung erhalten bleiben. Bei allen diesen Ausführungen dient das Zwischenglied 7 in drei Funktionen als Dichtungs-, Befestigungs- und Regulierglied. Fig. 2 zeigt eine Fluidzuleitung 2 in Form eines mit Druckluft beaufschlagten Rohrs, an welches mittels der in Fig. 1 dargestellten Befestigungsanordnung eine Vielzahl langgestreckter Belüfter 1 angeschlossen sind. Wie ersichtlich, besteht dann, wenn diese unmittelbar nebeneinander angeordnet sind, keine Möglichkeit, sie einzeln zu drehen, um sie z. B. mit einem Gewindestutzen in eine Bohrung im Rohr 2 einzuschrauben, wie dies bei den runden Belüftern gemäß DE-C2-33 16 140 vorgesehen ist. Man kann bei unmittelbar aneinandergrenzder Anordnung der Belüfter 1 auch nicht mehr unterhalb derselben an den Befestigungsstellen am Rohr 2 hantieren, um z. B. Überwurfmuttern festzuziehen. Dagegen bereitet es keine Schwierigkeiten, die Belüfter 1 mit ihren Stutzen von oben in die mit dem buchsenförmigen Zwischenglied 7 versehenen radialen Bohrungen im Rohr 2 einzustecken.

Die z. B. ca. 20 bis 30 cm breiten Belüfter 1 sind in Fig. 3 im Längsschnitt und in Fig. 4 im Querschnitt dargestelt. Sie bestehen aus einem Basisteil 16, welches zweckmäßigerweise einstückig mit dem Stutzen 5 und einer im Querschnitt nach oben gewölbten Oberseite geformt ist. Das Basisteil 16 kann z. B. aus Kunststoff, Metall oder einem anderen geeigneten Material bestehen. Zweckmäßig ist, wie gezeigt, die Form eines tonnenförmig aufgewölbten Bretts mit geeigneten Versteifungsrippen 17 auf der Unterseite.

Auf die Oberseite des Basisteils 16 ist eine elastische Membran 18, z. B. aus Gummi oder einem gummiähnlichen Kunststoff, mit geringer Vorspannung aufgezogen. Die Membran 18 übergreift die seitlichen Längskanten des Basisteils 16. An dessen beiden Enden drücken Klemmschellen 19 die Membran 18 fest und dauerhaft dicht gegen die Oberseite des Basisteils 16.

Die Membran 18 ist mit einer Vielzahl kleiner Öffnungen 15 versehen, durch welche die über das Rohr 2 zugeführte Luft in Form kleiner Blasen in der zu belüftenden Flüssigkeit verteilt wird. Wird die Membran 18 über den Durchgangskanal 6 im Stutzen 5 von unten mit Druckluft beaufschlagt, so wölbt sie sich gemäß Fig. 4 auf und hebt von der Oberseite des Basisteils 16 ab. Infolge der Dehnung werden die Öffnungen 15 etwas weiter geöffnet. Liegt dagegen bei abgeschalteter Druckluft die Membran 18 dicht an der Oberseite des Basisteils 16 an, so kann kein Abwasser 15 in den Bereich zwischen Membran 18 und Basisteils 16 sowie weiter in den Durchgangskanal 6 eindringen, da sich vor dessen oberer Mündung keine Öffnung 15 befindet. Falls zur gleichmäßigeren Luftverteilung über die Länge des Belüfters 1 in der Oberseite des Basisteils 16 eine mit dem Durchgangskanal 6 kommunizierende Längsnut 20 angebracht ist, welche kurz vor den Klemmschellen 19 endet, sollten sich dementsprechend auch über dieser Nut 20 keine Öffnungen 15 in der Membran 18 befinden.

Zur teilweisen Entlastung der Membran 18 im aufgewölbten Zustand gemäß Fig. 4 kann ein in Fig. 3 und 4 nicht gezeigter, sich oberhalb der Membran erstreckender Abstützstab angebracht sein, an den sich die aufgewölbte Membran von unter her anlegt. Der Abstützstab kann z. B. mit den Enden des Basisteils 16 verbunden sein. Mit geeignetem Querschnitt, ggf. auch in Verbindung mit Leitblechen, kann er die weitere Funktion haben, durch Wirbelbildung dafür zu sorgen, die Verweilzeit der Blasen im Wasser und damit die für die Lösung von Sauerstoff zur Verfügung stehende Zeitspanne zu verlängern.

Aus Fig. 3 und 4 geht weiterhin hervor, daß das buchsenförmige Zwischenglied 7 einen sehr breiten Flansch 8 hat, der auf seiner Unterseite dem Rohr 2 und auf seiner Oberseite dem daran anliegenden Bereich des Basisteils 16 angepaßt ist. Durch die großflächige gegenseitige Anlage der Teile wird die wegen über die Länge gleichmäßiger Belüftungsfunktion möglichst genaue horizontale Ausrichtung der Belüfter 1 erleichtert.

Betrachtet man die während des Betriebs an den verschiedenen Teilen des Belüfters 1 und des buchsenförmigen Zwischenglieds 7 auftretenden Kräfte, so ist zunächst als Vorteil der vorgeschlagenen, in der Draufsicht im wesentlichen rechteckigen Form des Basisteils 16 und der Membran 18 festzustellen, daß trotz der im Verhältnis zur Breite großen Oberfläche die an der Membran 18 auftretenden Druckkräfte zu keiner starken Dehnung führen, weil sich die Membran 18 nur auf dem kurzen Abstand zwischen den seitlichen Längskanten des Basisteils 16 spannt. Dort werden die Druckkräfte abgestützt. Es versteht sich, daß diese vorteilhafte Konstruktion des in Draufsicht im wesentlichen langgestreckten, rechteckigen Belüfters auch bei herkömmlichen Befestigungen an der Fluidzuleitung angewendet werden kann.

Da die Druckkräfte die Tendenz haben, den Belüfter 1 mitsamt buchsenförmigem Zwischenglied 7 aus dem Loch 4 zu drängen, empfiehlt sich insbesondere bei verhältnismäßig großflächigen Belüftern gemäß Fig. 2 die Verwendung eines buchsenförmigen Zwischenglieds 7 mit einem am Ende angeformten Ringwulst 9, wie bereits oben erwähnt. Außerdem kann es sich als zweckmäßig erweisen, auch den Stutzen 5 an seinem freien Ende mit einem ggf. angefasten Ringwulst 21 auszubilden, welcher bei der Montage durch das buchsenförmige Zwischenglied 7 hindurchzudrücken ist und im montierten Zustand hinter dessen innerer Stirnfläche einrastet. Die länglichen Belüfter können je nach Anwendungsfall z. B. auch ein mit einem Anschlußstutzen verbundenes Basisteil in Form eines perforierten, an den Enden geschlossenen Rohrs haben, auf welchem mit schwacher Vorspannung eine poröse, vielfach perforierte oder mit kleinen Schlitzen versehene elastische Hüllmembran sitzt, die der Feinverteilung der Luft oder allgemein eines Gases in der die Verteilvorrichtung 1 umgebenden Flüssigkeit dient.

Die sich bei jeder Flächenbelüftung stellende Aufgabe der Verhinderung der Schlammablagerung kann z. B. durch Auffüllen des Raums unter den Belüftern mit Sand gelöst werden, falls es bei der unmittelbar aneinandergrenzenden Anordnung der Belüfter trotz einer üblichen horizontalen Belebtschlamm-Umwälzung zweckmäßig erscheint.

**Patentansprüche**

1. Belüftungseinrichtung, insbesondere für Abwasserbecken, bestehend aus an einer Fluidzuleitung (2) befestigten Belüftern (1), wobei jeweils eines dieser beiden Teile mit einem Loch (4) und das andere mit einem dicht in dem Loch sitzenden Stutzen (5) mit einem Durchgangskanal (6) zum Belüfter (1) ausgebildet ist und zwischen der Lochwand (4) und dem Stutzen (5) ein buchsenförmiges, hart-elastisches Zwischenglied (7) aus Kunststoff oder Hartgummi derart fest radial eingespannt ist, daß es gegen die anliegenden Flächen dichtet und reibungsschlüssig entgegen der Einführrichtung auf den Stutzen (5) wirkende axiale Kräfte auf die Lochwand (4) überträgt, **da-**

**durch gekennzeichnet**, daß die Belüfter (1) eine längliche Form haben, unmittelbar aneinandergrenzend an der Fluidzuleitung (2) befestigt sind und sich quer zu dieser erstrecken.

2. Belüftungseinrichtung nach Anspruch 1, **dadurch gekennzeichnet**, daß die innere Mantelfläche des buchsenförmigen Zwischenglieds (7) im Ausgangzustand einen sich in Einführrichtung des Stutzens (5) konisch verjüngenden inneren Hohlraum begrenzt und sich der Stutzen (5) von dem in Einführrichtung vorderen zum hinteren Ende konisch erweitert.

3. Belüftungseinrichtung nach Anspruch 2, **dadurch gekennzeichnet**, daß der Konuswinkel des Stutzens (5) kleiner ist als der Konuswinkel der inneren Mantelfläche des Zwischenglieds (7).

4. Belüftungseinrichtung nach einem der Ansprüche 1 bis 3, **dadurch gekennzeichnet**, daß der Stutzen (5) außen schlauchtüllenförmig oder mit Ringrippen geformt ist.

5. Belüftungseinrichtung nach einem der vorhergehenden Ansprüche, **dadurch gekennzeichnet**, daß durch Drehung und/oder axiale Verschiebung des Stutzens (5) im montierten Zustand eine Zutrittsöffnung (11) oder ein Zutrittskanal zum Durchgangskanal (6) durch eine oder mehrere Steuerkanten oder Steuerflächen am Zwischenglied (7), dem Stutzen (5) oder wenigstens einem zwischen diesen beiden Teilen angeordneten Steuerglied (12) teilweise verschließbar ist.

6. Belüftungseinrichtung nach Anspruch 5, **dadurch gekennzeichnet**, daß die Steuerkanten oder -flächen schwingfähig ausgebildet und durch das in die Eintrittsöffnung des Durchgangskanals (6) einströmende Fluid zum Schwingen anregbar sind.

7. Belüftungseinrichtung nach einem der vorhergehenden Ansprüche, **dadurch gekennzeichnet**, daß das Zwischenglied (7) topfförmig mit einem Boden (10) und einer oder mehreren mit dem Durchgangskanal (6) kommunizierenden Durchtrittsöffnungen (11) ausgebildet ist, wobei zwischen dem Boden (10) und der Stirnfläche des Stutzens (5) ein durch Veränderung der axialen und/oder Drehwinkelstellung des Stutzens (5) mit Bezug auf das Zwischenglied (7) veränderbarer Drosselspalt (bei 11, 11) für das von der Durchtrittsöffnung (11) zum Durchgangskanal (6) strömende Fluid gebildet ist.

8. Belüftungseinrichtung nach Anspruch 7, **dadurch gekennzeichnet**, daß zwischen dem Boden (10) des Zwischenglieds (7) und der Stirnfläche des Stutzens (5) ein verformbares Drosselglied (12) eingesetzt ist, dessen freier Durchlaßquerschnitt durch Veränderung des axialen Abstands zwischen dem Boden (10) und der Stirnfläche des Stutzens (5) steuerbar ist.

9. Belüftungseinrichtung nach Anspruch 8, **dadurch gekennzeichnet**, daß das Drosselglied (12) ein poröser, elastischer Köper aus porendurchgängigem Material ist.

10. Belüftungseinrichtung nach einem der vorhergehenden Ansprüche, **dadurch gekennzeichnet**, daß das Zwischenglied (7, 8) außerhalb des Lochs (4) großflächig an dem Belüfter (1) und-/oder an der Außenfläche der Fluidzuleitung (2, 3) anliegt.

11. Belüftungseinrichtung nach einem der vorhergehenden Ansprüche, **dadurch gekennzeichnet**, daß das buchsenförmige Zwischenglied (7) und-/oder der Stutzen (5) mit dem in Einführrichtung vorderen Ende ein wenig aus der sie jeweils aufnehmenden Bohrung herausragen und an diesem Ende mit wenigstens einem radialen Vorsprung oder Ringwulst (9, 21) ausgebildet sind.

12. Belüftungseinrichtung nach Anspruch 1, **dadurch gekennzeichnet**, daß jeder Belüfter (1) aus einem mit einem Stutzen (5) versehenen, rohrförmigen oder im Querschnitt im wesentlichen kreisabschnitt- oder kreissektorförmigen, mit der Rundung nach oben weisenden, langgestreckten Basisteil (16) mit wenigstens einer Luftaustrittsöffnung (20) auf der Oberseite und einer diese überspannenden, vielfach durchbrochenen, elastischen Membran (18) besteht, welche die Luftaustrittsöffnung (20) des Basisteils (16) dicht abdeckt und durch den Fluiddruck von der gerundeten Oberseite des Basisteils (16) elastisch abhebbar ist.

13. Belüftungseinrichtung nach Anspruch 12, **dadurch gekennzeichnet**, daß die elastische Membran (18) die seitlichen Längskanten des kreisabschnitt- oder kreissektorförmigen Basisteils (16) übergreift und an dessen Enden auf seiner Oberseite dicht anliegend gehalten ist. 14. Belüftungseinrichtung nach Anspruch 12 oder 13, **dadurch gekennzeichnet**, daß man Basisteil (16) oder der Fluidzuleitung (2) ein sich oberhalb der Membran (18) erstreckenden Abstützstab angebracht ist, welcher die elastische Aufwölbung der Membran (18) bei deren Druckbeaufschlagung begrenzt.

## Claims

1. A ventilation device, in particular for waste water tanks, comprising ventilators (1) attached to a fluid inlet duct (2), wherein in each case one of these two parts is formed with a hole (4) and the other part with a connector (5) which is seated fluidtightly in the hole and which has a passage duct (6) to the ventilator (1), and a bush-like, hard elastic intermediate member (7) of plastics material or hard rubber is inserted securely and radially between the hole wall (4) and the connector (5) in such a way that it provides a seal against the adjoining surfaces and transmits to the hole wall (4) axial forces acting on the connector (5) with frictional resistance counter to the direction of insertion, characterised in that the ventilators (1) are of elongate shape, are attached immediately adjacent one another to the fluid inlet duct (2) and extend transversely to the latter.

2. A ventilation device according to Claim 1, characterised in that, in its initial condition, the inner circumferential surface of the bush-like intermediate member (7) defines an inner cavity tapering in the insertion direction of the connector (5) and the connector (5) widens conically from the front end to the rear end in the insertion direction.

3. A ventilation device according to Claim 2, characterised in that the cone angle of the connector (5) is smaller than the cone angle of the inner circumferential surface of the intermediate member (7).

4. A ventilation device according to Claims 1 to 3, characterised in that the connector (5) is formed externally in the shape of a tubular nozzle or with annular ribs.

5. A ventilation device according to any one of the preceding Claims, characterised in that by rotation and/ or axial displacement of the connector (5) in the installed condition an inlet opening (11) or an inlet duct to the passage duct (6) can be partly closed by one or more control edges or control surfaces on the intermediate member (7), on the connector (5) or on at least one control member (12) disposed between these two parts.

6. A ventilation device according to Claim 5, characterised in that the control edges or surfaces are formed so as to be able to oscillate and can be induced to oscillate by the fluid flowing into the inlet opening of the passage duct (6).

7. A ventilation device according to any one of the preceding Claims, characterised in that the intermediate member (7) is cup-shaped with a base (10) and one or more passage openings (11) communicating with the passage duct (6), there being formed a throttle clearance (at 11, 11) between the base (10) and the end face of the connector (5) for the fluid flowing from the passage opening (11) to the passage duct (6), which can be varied by varying the axial and/or rotational angle position of the connector (5) in relation to the intermediate member (7).

8. A ventilation device according to Claim 7, characterised in that a deformable throttle member (12) is inserted between the base (10) of the intermediate member (7) and the end face of the connector (5) and its free passage cross-section can be controlled by varying the axial distance between the base (10) and the end face of the connector (5).

9. A ventilation device according to Claim 8, characterised in that the throttle member (12) is a porous, elastic body of pore-permeable material.

10. A ventilation device according to any one of the preceding Claims, characterised in that outside the hole (4) the intermediate member (7, 8) is applied over a large area against the ventilator (1) and/or against the outer surface of the fluid inlet duct (2, 3).

11. A ventilation device according to any one of the preceding Claims, characterised in that at the leading end in the insertion direction the bush-like intermediate member (7) and/or the connector (5) project to a small extent from the respective bore accommodating them and at this end they are formed with at least one radial projection or annular bead (9, 21).

12. A ventilation device according to Claim 1, characterised in that each ventilator (1) comprises an elongate base member (16) which is provided with a connector (5), which is tubular or of substantially circular-segment or circular-sector shaped cross-section and the curvature of which faces upwardly, said base member (16) having at least one air-outlet opening (20) on the upper side and an elastic, multiply perforated diaphragm (18) which extends over said opening and tightly covers the air-outlet opening (20) of the base member (16), and which can be lifted elastically from the rounded upper side of the base member (16) by the fluid pressure.

13. A ventilation device according to Claim 12, characterised in that the elastic diaphragm (18) engages over the lateral longitudinal edges of the circular-segment or circular-sector shaped base member (16) and is retained and applied tightly against its ends on the upper side thereof.

14. A ventilation device according to Claim 12 or 13, characterised in that a support bar, which extends above the diaphragm (18) and which limits the elastic bulging of the diaphragm (18) when pressure acts thereon, is fitted to the base member (16) or the fluid inlet duct (2).

## Revendications

1°) Installation de ventilation, notamment pour des bassins d'eaux usées, se composant d'un aérateur (1) fixé à une conduite de fluide (2), l'un de ces deux éléments étant muni d'un orifice (4) et l'autre d'un manchon (5) logé de manière étanche dans cet orifice, ce manchon comportant un canal de passage (6) vers l'aérateur (1), un élément intermédiaire élastique dur, (7) en matière plastique ou en caoutchouc dur, en forme de douille étant prévu entre la paroi de l'orifice (4) et le manchon (5), en étant serré solidement de manière radiale, de façon étanche par rapport aux surfaces adjacentes et pour transmettre les forces axiales agissant sur le manchon (5), par une liaison de frottement s'opposant à la direction d'introduction, à la paroi de l'orifice (4), installation caractérisée en ce que les aérateurs (1) ont une forme allongée et sont fixés de manière directement adjacente dans la conduite de fluide (2) et ces aérateurs s'étendent transversalement à cette conduite.

2°) Installation de ventilation selon la revendication 1, caractérisée en ce que la surface enveloppe intérieure de l'élément intermédiaire (7) en forme de douille, à l'état de repos délimite un volume creux, intérieur, allant en se rétrécissant de manière conique dans la direction d'introduction du manchon (5) qui va en s'élargissant de façon conique de l'extrémité avant jusqu'à l'extrémité arrière selon la direction d'introduction.

3°) Installation de ventilation selon la revendication 2, caractérisée en ce que l'angle du cône du manchon (5) est inférieur à l'angle du cône de la surface enveloppe intérieure de l'élément intermédiaire (7).

4°) Installation de ventilation selon l'une des revendications 1 à 3, caractérisée en ce que, extérieurement, le manchon (5) est en forme de connecteur de tube ou comporte des nervures annulaires.

5°) Installation de ventilation selon l'une des revendications précédentes, caractérisée en ce que par rotation et/ou translation axiale du manchon (5) à l'état monté, on ferme partiellement un orifice ou canal d'accès (11) vers le canal de passage (6) par une ou plusieurs arêtes de commande ou surfaces de commande de l'élément intermédiaire (7), du manchon (5) ou d'au moins un organe de commande prévu entre ces deux pièces.

6°) Installation de ventilation selon la revendication 5, caractérisée en ce que les arêtes de commande ou les surfaces de commande sont réalisées de façon à pouvoir osciller et en ce que le fluide qui pénètre dans l'orifice d'entrée du canal de passage (6) peut être excité pour osciller.

7°) Installation de ventilation selon l'une des revendications précédentes, caractérisée en ce que l'élément intermédiaire (7) est réalisé en forme de pot avec un fond (10) et un ou plusieurs orifices de passage (11) communiquant avec le canal de passage (6), et entre le fond (10) et la surface frontale du manchon (5) il y a un intervalle d'étranglement (en 11, 11) variable, formé par modification de la position axiale et/ou de la position de rotation angulaire du manchon (5) par rapport à l'élément intermédiaire (7), pour le fluide passant de l'orifice traversant (11) dans le canal de passage (6).

8°) Installation de ventilation selon la revendication 7, caractérisée en ce qu'entre le fond (10) de l'élément intermédiaire (7) et la surface frontale du manchon (5) il y a un élément d'étranglement (12) déformable dont la section de passage libre peut être commandée par modification de la distance axiale entre le fond (10) et la surface frontale du manchon (5).

9°) Installation de ventilation selon la revendication 8, caractérisée en ce que l'élément d'étranglement (12) est un corps élastique poreux en un matériau à pores communiquants.

10°) Installation de ventilation selon l'une des revendications précédentes, caractérisée en ce que l'élément intermédiaire (7, 8) s'applique à l'extérieur de l'orifice (4) en grande surface contre l'aérateur (1) et/ou contre la surface extérieure de la conduite à fluide (2, 3).

11°) Installation de ventilation selon l'une des revendications précédentes, caractérisée en ce que l'élément intermédiaire (7) en forme de douille et/ou le manchon (5) sortent par leur extrémité avant dans le sens de l'introduction, légèrement du perçage qui les reçoit et à cette extrémité ces pièces sont au moins munies d'une saillie radiale ou d'un bourrelet annulaire (9, 21).

12°) Installation de ventilation selon la revendication 1, caractérisée en ce que chaque aérateur (1) se compose d'une pièce de base (16) munie d'un manchon (5), tubulaire ou à section essentiellement semi circulaire ou en forme de secteur de cercle, cette pièce de base étant allongée avec l'arrondi tourné vers le haut et au moins un orifice de sortie d'aération (20) sur le côté supérieur et une membrane élastique (18) coupée en de multiples endroits et qui recouvre cet orifice, cette membrane recouvrant de manière étanche l'orifice de sortie d'air (20) de l'élément de base (16) et se dégageant élastiquement de la face supérieure arrondie de l'élément de base (16) par la pression du fluide.

13°) Installation de ventilation selon la revendication 12, caractérisée en ce que la membrane élastique (18) recouvre les arêtes longitudinales latérales de la partie de base en forme de serpent de cercle ou de secteur de cercle (16) et est maintenue appliquée de manière étanche contre cette face supérieure par ses extrémités.

14°) Installation de ventilation selon la revendication 12 ou 13, caractérisée en ce qu'une tige d'appui s'étendant au-dessus de la membrane (18) est prévue sur l'élément de base (16) ou la conduite de fluide (2), cette tige limitant le bombement élastique de la membrane (18) sollicitée en pression.

# Fig. 1

BETON 3

3 BETON

2

3 BETON

Fig. 2

Fig. 3

Fig. 4